# EUROPÄISCHE PATENTSCHRIFT

(11) **EP 1 431 163 B1**
(45) Veröffentlichungstag und Bekanntmachung des Hinweises auf die Patenterteilung: **25.10.2006**
(21) Anmeldenummer: 03027134.0
(22) Anmeldetag: 26.11.2003
(51) Int. Cl.: B62D 5/093, B62D 5/12, B62D 5/06

(54) **Hydraulischer Antrieb**
Hydraulic drive
Dispositif à actionnement hydraulique

(30) Priorität: 17.12.2002 DE 10259038
(43) Veröffentlichungstag der Anmeldung: 23.06.2004
(73) Patentinhaber: STILL GMBH, 22113 Hamburg (DE)
(72) Erfinder: Stall, Eugen, Dr., 53819 Neunkirchen (DE)
(74) Vertreter: Geirhos, Johann

(56) Entgegenhaltungen:
- EP-A- 0 407 768
- EP-A- 1 046 570
- FR-A- 2 482 680
- US-A- 6 131 389
- PATENT ABSTRACTS OF JAPAN Bd. 1997, Nr. 06, 30. Juni 1997 (1997-06-30) -& JP 09 039818 A (SUMITOMO R KK), 10. Februar 1997 (1997-02-10)

## Beschreibung

Die Erfindung betrifft einen hydraulischen Lenkantrieb, mit einer als Lenkwinkelgeber ausgebildeten Positionsvorgabeeinrichtung, die mit einem als Lenkventil ausgebildeten Stellventil in Verbindung steht, das in Abhängigkeit von der Betätigung der Positionsvorgabeeinrichtung die Verbindung eines als Lenkzylinder ausgebildeten Stellzylinders mit einer Druckmittelquelle und einem Behälter steuert, und einer Korrektureinrichtung, die in einem von der Geradeausfahrstellung des Lenkantriebs gebildeten Referenzbereich eine Synchronisation zwischen der Stellung der Positionsvorgabeeinrichtung und der Stellung des Stellzylinders ermöglicht, gemäss dem oberbegriff des anspruchs 1.

Als Lenkantriebe ausgebildete hydraulische Antriebe, bei denen ein von einem Lenkwinkelgeber, beispielsweise einem Lenkrad, betätigtes Lenkventil die Beaufschlagung eines Lenkzylinders, der an einer Lenkachse mit den gelenkten Rädern in Wirkverbindung steht, werden in Arbeitsmaschinen, beispielsweise Baumaschinen oder Flurförderzeugen, eingesetzt. Bei derartigen hydraulischen Lenkantrieben kommt es aufgrund von Leckagen an dem Lenkventil und/oder dem Lenkzylinder zu Abweichungen zwischen der Stellung des Lenkantriebs und der Stellung des als vorzugsweise als Lenkrad ausgebildeten Lenkwinkelgebers.

Diese Leckagen führen dazu, dass die Drehposition des Lenkrades und die Stellung des Lenkzylinders und somit die Stellung der gelenkten Räder nicht immer übereinstimmen und somit nicht synchron sind. Besonders für die Geradeausfahrstellung des Lenkantriebs treten aufgrund der Leckagen unterschiedliche Drehpositionen des Lenkrades auf. Für eine Bedienperson einer derartigen Arbeitsmaschine führt dies zu unangenehmen Situationen, da die Zuordnung der Drehposition des Lenkrades mit der Stellung der gelenkten Räder nicht eindeutig und beständig ist. Zudem können hierdurch gefährliche Betriebssituationen auftreten, wenn die Bedienperson an dem Lenkwinkelgeber beispielsweise die Geradeausfahrstellung vorgibt, die Arbeitsmaschine aber aufgrund der nicht synchronen Zuordnung zwischen der Stellung des Lenkwinkelgebers und der Stellung des Stellung des Lenkantriebs eine Kurve fährt. Dieses Betriebsverhalten hydraulischer Lenkeinrichtungen kann auch führen, dass die Bedienperson den Lenkwinkelgeber ständig nachführen muss, um die gewünschte Fahrtrichtung der Arbeitsmaschine bei einer längeren Geradeausfahrt beizubehalten, wodurch sich für die Bedienperson derartiger Arbeitsmaschinen ein hoher Konzentrationsbedarf ergibt, der zu einem schnellen Ermüden der Bedienperson führt. Von der Bedienperson ist jedoch ein Betriebsverhalten eines hydraulischen Lenkantriebs erwünscht, dass eine definierte Stellung des Lenkrads in der Geradeausfahrstellung immer geben ist.

Um die Stellung des Lenkwinkelgebers mit der Stellung des Lenkzylinders bei hydraulischen Lenkeinrichtungen zu synchronisieren und somit eine Synchronisation zwischen der Stellung des Lenkwinkelgebers und der Stellung des Lenkzylinders zu ermöglichen, sind Korrektureinrichtungen bekannt, die einen Abgleich der Stellung des Lenkzylinders auf die Stellung des Lenkwinkelgebers ermöglichen. Bei bekannten Korrektureinrichtungen wird mittels eines Absolutsensors, der an dem Lenkwinkelgeber angeordnet ist, die Stellung des Lenkwinkelgebers und somit der Sollwert für den Lenkeinschlag erfasst. Der Istwert des Lenkeinschlags wird mittels eines an dem Lenkzylinder angeordneten Absolutsensors erfasst. Diese Absolutsensoren stehen mit einer elektronischen Regeleinrichtung in Wirkverbindung, in der ein ständiger und kontinuierlicher Soll-Ist-Wert-Vergleich des Lenkeinschlags durchgeführt wird, und bei einer Abweichung zwischen der Stellung des Lenkzylinders und der Stellung des Lenkwinkelgebers durch eine Beaufschlagung des Lenkzylinders eine Synchronisation des Lenkzylinders und des Lenkwinkelgebers herstellt. Derartige Absolutsensoren, beispielsweise Proportionalsensoren, die die Stellung des Lenkwinkelgebers und die Stellung des Lenkzylinders erfassen, und die zugehörige elektronische Regeleinrichtung weisen jedoch hohe Herstellkosten auf, wodurch sich für die hydraulische Lenkantrieb mit einer Korrektureinrichtung ein hoher Herstellaufwand ergibt.

Zudem sind Korrektureinrichtungen bekannt, bei denen der Abgleich des Lenkzylinders auf die Geradeausstellung des Lenkwinkelgebers beschränkt ist. Bei einer bekannten Korrektureinrichtung ist am Lenkzylinder ein Schieberventil ausgebildet, das eine Verbindung des Lenkzylinders mit dem Behälter ermöglicht, wenn sich der Lenkzylinder außerhalb des Geradeausfahrstellung befindet. Die Stellung des Lenkwinkelgebers, d.h. des Lenkrads, wird mit einem Sensor erfasst, der mit einer elektronischen Steuerung in Wirkverbindung steht. Die Steuereinrichtung steuert ein elektrisch betätigtes Schaltventil, das in der Verbindung des Schieberventils mit dem Behälter angeordnet ist, derart an, dass die von dem Schieberventil hergestellte Verbindung des Lenkzylinders mit dem Behälter bei in der Geradeausfahrstellung des Lenkwinkelgebers geöffnet wird. Ein derartiger gattungsgemäßer Lenkantrieb ist aus der JP 9 039 818 A bekannt.

Derartige Korrektureinrichtungen weisen jedoch durch die elektrischen und/oder elektronischen Bauteile, beispielsweise die Sensoren und die elektronische Steuereinrichtung, einen hohen Bauaufwand auf und verursachen hohe Herstellkosten. Zudem werden bei Lenkantrieben für Flurförderzeuge, die in der Regel rauhen Umgebungsbedingungen ausgesetzt sind, hohe Anforderungen an die Verfügbarkeit, Lebensdauer und Betriebssicherheit der Korrektureinrichtung gestellt, wodurch die elektronischen Bauteile entsprechend robust ausgelegt werden müssen und an geschützter Stelle im Flurförderzeug untergebracht werden müssen, wodurch sich der Bauaufwand weiter erhöht.

Der vorliegenden Erfindung liegt die Aufgabe zugrunde, einen hydraulischen Lenkantrieb mit einer Korrektureinrichtung zur Verfügung zu stellen, der mit geringem Bauaufwand und geringem Herstellaufwand eine hohe Verfügbarkeit, Betriebssicherheit und Lebensdauer aufweist, gemäss dem kennzeichender Teil des Anspruchs 1.

Diese Aufgabe wird erfindungsgemäß dadurch gelöst, dass die Korrektureinrichtung eine Schieberventilfunktion, die den Referenzbereich des Stellzylinders erfasst und bei nicht im Referenzbereich befindlichem Stellzylinder einen Druckmittelausgleich am Stellzylinder ermöglicht, und eine mit der Positionsvorgabeeinrichtung in mechanischer Wirkverbindung stehende Schaltventilfunktion aufweist, die eine den Druckmittel-gleich sperrende Sperrstellung und eine den Druckmittelausgleich ermöglichende Durchflussstellung aufweist, wobei die Schaltventilfunktion bei in dem Referenzbereich befindlicher Positionsvorgabeeinrichtung in die Durchflussstellung und bei nicht in dem Referenzbereich befindlicher Positionsvorgabeeinrichtung in die Sperrstellung beaufschlagt ist. In erfindungsgemäßer Weise werden somit für die auf den Referenzbereich begrenzte Synchronisation der Stellung des Stellzylinders auf die Stellung der Positionsvorgabeeinrichtung kostengünstige und unter rauhen Umgebungsbedinungen robuste hydraulische Schaltelemente verwendet, die mechanisch angesteuert sind. Der hydraulische Antrieb kann somit auf einfache Weise und mit geringem Herstellaufwand mit einer unter rauhen Umgebungsbedingungen sicher arbeitende Korrektureinrichtung versehen werden, wodurch mit geringem Bauaufwand und geringem Herstellaufwand eine hohe Verfügbarkeit, Betriebssicherheit und Lebensdauer erzielt werden kann.

Gemäß einer bevorzugten Ausführungsform der Erfindung ist der Druckmittelausgleich durch eine von der Schieberventilfunktion steuerbare Verbindung des Stellzylinders mit dem Behälter herstellbar ist, wobei die Schieberventilfunktion bei nicht im Referenzbereich befindlichem Stellzylinder eine Verbindung des Stellzylinders mit dem Behälter ermöglicht. Durch den Abfluss von Druckmittel aus dem Stellzylinder kann auf einfache Weise bei in dem Referenzbereich befindlicher Positionsvorgabeeinrichtung und außerhalb des Referenzbereichs befindlichem Stellzylinder ein Abgleich der Stellung des Stellzylinders auf die Stellung der Positionsvorgabeeinrichtung erfolgen.

Besondere Vorteile ergeben sich hierbei, wenn die Schaltventilfunktion in der von der Schieberventilfunktion herstellbaren Verbindung des Stellzylinders mit dem Behälter angeordnet ist. Der Druckmittelabfluss aus dem Stellzylinder kann durch diese Schaltungsanordnung der Schaltventilfunktion auf einfache Weise auf Betriebszustände begrenzt werden, in denen sich die Positionsvorgabeeinrichtung im Referenzbereich befindet und somit die Schaltventilfunktion in die Durchflussstellung beaufschlagt ist und der Stellzylinder eine von dem Referenzbereich abweichende Stellung aufweist, in der die Schaltventilfunktion den Stellzylinder mit dem Behälter verbindet.

In einer vorteilhaften Ausgestaltung der Erfindung ist vorgesehen, dass die Schieberventilfunktion in dem Stellzylinder integriert ist.

Ein einfacher Aufbau ergibt sich hierbei, wenn die Schieberventilfunktion einen im Referenzbereich am Stellzylinder angeordneten Druckmittelanschluss aufweist, der mit einer den Druckmittelausgleich ermöglichenden Druckmittelverbindung in Verbindung steht, wobei der Druckmittelanschluss von einem Kolben des Stellzylinders ansteuerbar ist. Hierdurch kann auf einfache Weise eine Schieberventilfunktion erzeugt werden, bei der bei in der Referenzstellung befindlichem Stellzylinder die Verbindung zum Behälter gesperrt ist und bei der die Verbindung der entsprechenden Steuerdruckkammer des Stellzylinders zu dem über die Schaltventilfunktion mit dem Behälter in Verbindung stehenden Druckmittelanschluss über den Kolben für den Druckmittelabfluss hergestellt ist, wenn sich der Stellzylinder außerhalb des Referenzbereichs befindet.

Besondere Vorteile ergeben sich, wenn gemäß einer Weiterbildung der Erfindung am Kolben und/oder am Druckmittelanschluss und/oder in der Druckmittelverbindung eine Drosseleinrichtung ausgebildet ist. Mit einer festen oder verstellbaren Drosseleinrichtung kann auf einfache Weise eine erwünschte Steuer- und Schaltcharakteristik der Schieberventilfunktion erzielt werden. Die Drosseleinrichtung kann hierbei als in dem Druckmittelanschluss oder der Druckmittelverbindung angeordnete Drosseleinrichtung ausgebildet sein. Zudem ist es möglich, die Drosseleinrichtung als Steuerkante am Kolben auszubilden, um einen von der Abweichung des Stellzylinders von dem Referenzbereich abhängigen Steuerquerschnitt zu erzielen. Hierdurch kann beispielsweise bei zunehmender Abweichung des Stellzylinders von dem Referenzbereich eine zunehmende Abgleichsgeschwindigkeit durch einen zunehmenden Steuerquerschnitt erzielt werden.

Die Schaltventilfunktion ist gemäß einer bevorzugten Ausgestaltungsform der Erfindung als ein mit der Positionsvorgabeeinrichtung in mechanischer Wirkverbindung stehendes Schaltventil ausgebildet ist. Mit einem mechanisch gesteuerten Schaltventil kann auf einfache Weise die von der Schieberventilfunktion gesteuerte Druckmittelverbindung bei im Referenzbereich befindlicher Positionsvorgabeeinrichtung geöffnet bzw. bei außerhalb des Referenzbereichs befindlicher Positionsvorgabeeinrichtung gesperrt werden.

Besondere Vorteile ergeben sich, wenn gemäß einer Ausführungsform der Erfindung das Schaltventil als Drehschieberventil ausgebildet ist. Bei der Ausgestaltung des Antriebs als Lenkantrieb mit einem als Lenkwinkelgeber, beispielsweise einem Lenkrad, ausgebildeter Positionsvorgabeeinrichtung ergibt sich mit einem Drehschieberventil ein geringer Bauaufwand für das Schaltventil.

Die Schaltventilfunktion kann hierbei an einem als Drehschieberventil ausgebildeten Schaltventil auf einfache Weise ausgebildet werden, wenn das Drehschieberventil mit einer Steuerkante versehen ist, die im Referenzbereich der Positionsvorgabeeinrichtung die von der Schieberventilfunktion steuerbare Verbindung für den Druckmittelausgleich des Stellzylinders öffnet.

Ein geringer Bauaufwand für die mechanische Verbindung des Schaltventils mit der Positionsvorgabeeinrichtung ergibt sich, wenn das Schaltventil am Stellventil angeordnet ist.

Der Bauaufwand kann weiter verringert werden, wenn das Schaltventil in das Stellventil integriert ist. Am Stellventil ist lediglich eine zusätzliche Steuerkante erforderlich, mit der die Verbindung des Stellzylinders mit dem Behälter steuerbar ist.

Gemäß einer vorteilhaften Ausgestaltungsform der Erfindung ist der Referenzbereich im Bereich der Neutralstellung des Stellzylinders und/oder der Positionsvorgabeeinrichtung, insbesondere im Bereich der Geradeausfahrstellung des Lenkzylinders und/oder des Lenkwinkelgeber, ausgebildet. Bei als Baumaschinen oder Flurförderzeugen ausgebildeten Arbeitsmaschinen tritt die Geradeausfahrstellung im Betrieb mit großer Häufigkeit auf. Durch die intermittierende Synchronisation des Lenkantriebs in der mit großer Häufigkeit im Betrieb der Arbeitsmaschine auftretenden Geradeausfahrstellung kann somit auf einfache Weise sichergestellt werden, dass eine Synchronisation der Stellung des Lenkzylinders und der Stellung des Lenkwinkelgebers im Betrieb der Arbeitsmaschine erzielt wird.

Besondere Vorteile ergeben sich durch die Verwendung in einem Flurförderzeug, insbesondere einem Gabelstapler. Bei einem Flurförderzeug kann mit dem erfindungsgemäßen Lenkantrieb unter ausschließlicher Verwendung von mechanisch gesteuerten hydraulischen Ventilen eine Synchronität der Stellung des Lenkwinkelgebers und der Stellung des Lenkzylinder mit hoher Verfügbarkeit, hoher Betriebssicherheit und hoher Lebensdauer bei geringem Bauaufwand erzielt werden.

Weitere Vorteile und Einzelheiten der Erfindung werden anhand des in den schematischen Figuren dargestellten Ausführungsbeispiels näher erläutert. Hierbei zeigt
- Figur 1: eine erste Ausführungsform eines erfindungsgemäßen als Lenkantrieb ausgebildetes hydraulischen Antriebs,

- Figur 2: eine zweite Ausführungsform eines erfindungsgemäßen als Lenkantrieb ausgebildetes hydraulischen Antriebs und
- Figur 3: den Stellzylinder eines erfindungsgemäßen Antriebs.

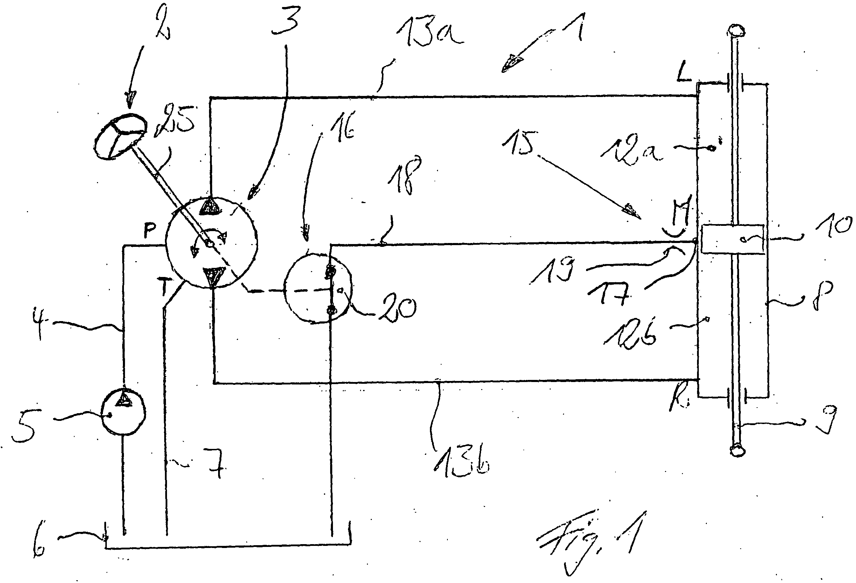

In der Figur 1 ist eine erste Ausführungsform eines als Lenkantrieb 1, beispielsweise für eine als Flurförderzeug ausgebildeten Arbeitsmaschine, ausgebildeten hydraulischen Antriebs gezeigt.

Der Lenkantrieb 1 weist eine als Lenkwinkelgeber ausgebildeten Positionsvorgabeeinrichtung 2 auf, beispielsweise ein Lenkrad, die mit einem als Lenkventil ausgebildeten Stellventil 3 in Wirkverbindung steht, beispielsweise mittels eines als Lenksäule ausgebildeten Gestänges 25. Das Stellventil 3 ist als Drehschieberventil ausgebildet und steht mit einer Förderleitung 4 einer als Pumpe ausgebildeten Druckmittelquelle 5 in Verbindung, die eingangsseitig mit einem Behälter 6 verbunden ist. Das Stellventil 3 ist weiterhin an eine zu dem Behälter 6 geführte Behälterleitung 7 angeschlossen.

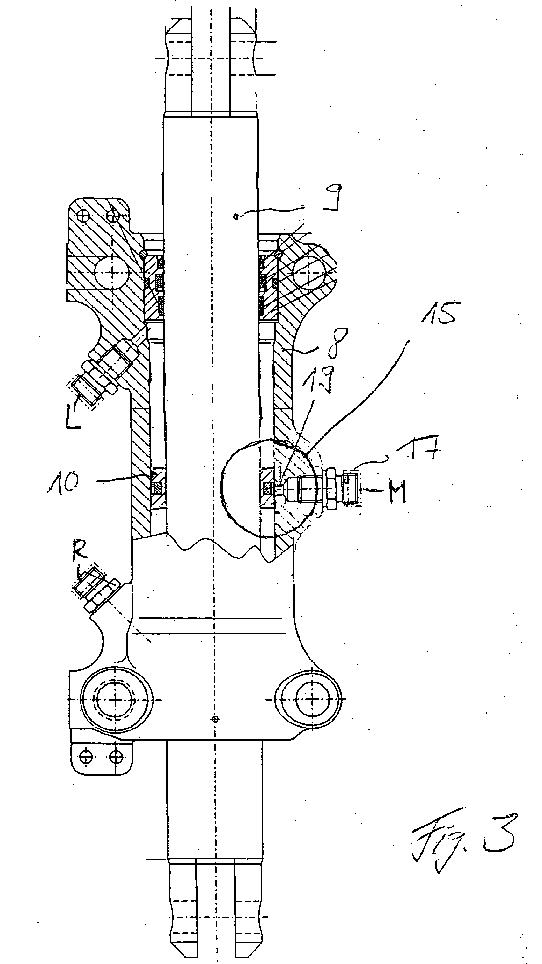

Die Lenkantrieb 1 weist weiterhin einen doppeltwirkenden als Lenkzylinder ausgebildete Stellzylinder 8 auf, der auf nicht mehr dargestellte Weise an einer Lenkachse angeordnet ist und mit den gelenkten Rädern in Wirkverbindung steht. Der Stellzylinder 8 weist - wie aus der Figur 3 ersichtlich ist - einen an einer Zylinderstange 9 ausgebildeten Kolben 10 auf, der den Stellzylinder 8 in einen ersten Steuerdruckraum 12a und einen zweiten Steuerdruckraum 12b unterteilt. Das Stellventil 3 steht mit dem ersten Steuerdruckraum 12a mittels einer Steuerleitung 13a in Verbindung. Der zweite Steuerdruckraum 13b steht entsprechend mittels einer zweiten Steuerleitung 13b mit dem Stellventil 3 in Verbindung.

Erfindungsgemäß ist der Lenkantrieb 1 mit einer Korrektureinrichtung vorgesehen, die eine Schieberventilfunktion 15 und eine Schaltventilfunktion 16 umfasst.

Die Schieberventilfunktion 15 ist in dem Stellzylinder 8 integriert und umfasst einen in der Geradeausfahrstellung als Referenzbereich angeordneten Druckmittelanschluss 17, an den eine zu dem Behälter 6 geführte Druckmittelverbindung 18 angeschlossen ist. Der Druckmittelanschluss 17 ist hierbei von dem Kolben 10 des Stellzylinders 8 derart ansteuerbar, dass bei in dem Referenzbereich, d.h. der dargestellten Geradeausfahrstellung des Lenkzylinders, befindlichem Kolben 10, der Druckmittelanschluss 17 abgesperrt ist und bei von dem Referenzbereich abweichender Stellung des Kolbens 10 bei einer entsprechend großen Abweichung des Kolbens 10 von der Geradeausfahrstellung der Steuerdruckraum 12a bzw. 12b mit der Druckmittelverbindung 18 in Verbindung steht. Am Druckmittelanschluss 17 bzw. in der Druckmittelverbindung 18 ist eine Drosseleinrichtung 19 vorgesehen. Die Drosseleinrichtung 19 kann auf einfache Weise - wie in der Figur 3 gezeigt ist - als Drosselbohrung am Stellzylinder 8 ausgebildet werden.

Die Schaltventilfunktion 16 ist in der Druckmittelverbindung 18 angeordnet und als Schaltventil 20 mit einer Sperrstellung sowie einer Durchflussstellung ausgebildet. Das Schaltventil 20 steht mit der Positionsvorgabeeinrichtung 2 in mechanischer Wirkverbindung. Das Schaltventil 20 steht hierbei zweckmäßigerweise mit dem Gestänge 25 in Verbindung. Im Referenzbereich, d.h. bei in der dargestellten Geradeausfahrstellung befindlicher Positionsvorgabeeinrichtung 2, befindet sich das Schaltventil 20 in der Durchflussstellung. Befindet sich die Positionsvorgabeeinrichtung 2 in einer von dem Referenzbereich abweichenden Stellung ist das Schaltventil 20 in die Sperrstellung beaufschlagt, in der die Druckmittelverbindung 18 unterbrochen ist.

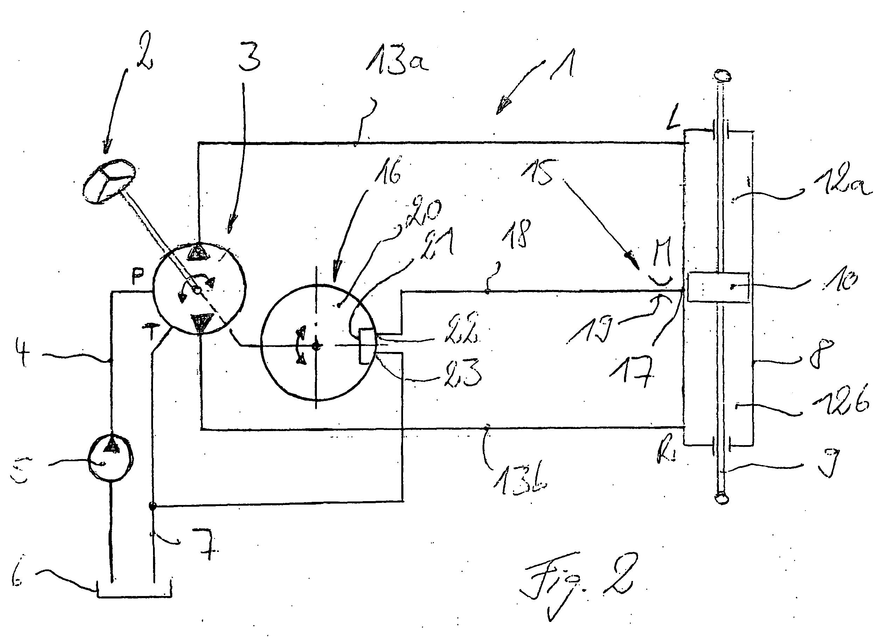

In der Figur 2 ist eine zweite Ausführungsform der Erfindung mit einem als Drehschieberventil ausgebildeten Schaltventil 20 dargestellt. Das Drehschieberventil steht mit der Positionsvorgabeeinrichtung 2 beispielsweise mittels des Gestänges 25 in mechanischer Wirkverbindung. Das Drehschieberventil ist mit einer Steuerkante 21 versehen, beispielsweise einer Steuemut, wobei das Drehschieberventil im Bereich der Steuernut 21 einen Druckmittelanschluss 22, an den der zum Stellzylinder 8 geführte Abschnitt der Druckmittelverbindung 18 angeschlossen ist, und einen weiteren Druckmittelanschluss 23 aufweist, an den der zum Behälter 6 geführte Abschnitt der Druckmittelverbindung 18 angeschlossen ist. In der dargestellten Geradeausfahrstellung bei im Referenzbereich befindlicher Positionsvorgabeeinrichtung 2, stehen die Druckmittelanschlüsse 22, 23 über die Steuernut 21 in Verbindung, wodurch die Druckmittelverbindung 18 vom Stellzylinder 8 zum Behälter 6 geöffnet ist. Das Drehschieberventil befindet sich somit in der Durchflussstellung. Bei einer von dem Referenzbereich abweichenden Stellung der Positionsvorgabeeinrichtung 2 wird entsprechende der Auslenkung des Drehschieberventils der Druckmittelanschluss 22 bzw. 23 von der Steuernut 21 abgesperrt, wodurch die Druckmittelverbindung 18 gesperrt wird. Das Drehschieberventil befindet sich somit in der Sperrstellung.

Die Druckmittelverbindung 18 kann gemäß der Figur 2 an die Behälterleitung 7 angeschlossen sein.

Das Schaltventil 20 kann als separates Ventil ausgebildet sein, das an das Stellventil 3 angebaut ist. Zudem ist möglich, insbesondere bei einer Ausgestaltung des Schaltventils 20 als Drehschieberventil, das Schaltventil 20 in das als Drehschieberventil ausgebildete Stellventil 3 zu integrieren. Die Druckmittelverbindung 18 von dem Schaltventil 20 zur Behälterleitung 7 kann hierbei innerhalb des Stellventils 3 ausgebildet werden.

### Der Lenkantrieb 1 mit einer erfindungsgemäßen Korrektureinrichtung arbeitet wie folgt:

Befindet sich die Positionsvorgabeeinrichtung 2 und der Stellzylinder 8 im Referenzbereich, d.h. der Geradeausfahrstellung des Lenkantriebs, ist das Schaltventil 20 in die Durchflussstellung beaufschlagt und die Schieberventilfunktion 15 gesperrt, da der Kolben 10 - wie aus der Figur 3 ersichtlich ist - den Druckmittelanschluss 19 absperrt.

Weist der Kolben 10 bei im Referenzbereich befindlicher Positionsvorgabeeinrichtung 2 eine entsprechend große Abweichung von der in den Figuren dargestellten als Referenzbereich ausgebildeten Geradeausfahrstellung auf, wird über den Kolben 10 der entsprechende Steuerdruckraum 12a bzw. 12b an den Druckmittelanschluss 19 angeschlossen, wodurch Druckmittel aus dem Steuerdruckraum 12a bzw. 12b, die Druckmittelverbindung 18, das in der Durchflussstellung befindliche Schaltventil 16 zum Behälter 6 abströmen kann. Der Kolben 10 kann somit zurück in die Geradeausfahrstellung und somit den Referenzbereich beaufschlagt werden, wodurch ein Abgleich der Stellung des Stellzylinders 8 auf die Stellung der Positionsvorgabeeinrichtung 2 erfolgt

Durch das Schaltventil 20 ist der Abgleich auf einen schmalen Bereich um den Referenzbereich und somit die Geradeausfahrstellung der Positionsvorgabeeinrichtung 2 beschränkt. Bei entsprechend großem Lenkwinkel an der als Lenkwinkelgeber ausgebildeten Positionsvorgabeeinrichtung 2 ist das Schaltventil 20 in die Sperrstellung beaufschlagt, in der kein Abgleich möglich ist.

Durch entsprechende Auslegung der Drosseleinrichtung 19 kann die Abgleichgeschwindigkeit des Stellzylinders 8 eingestellt werden. Bei einem Lenkantrieb kann durch entsprechende Auslegung der Drosseleinrichtung 19 ein zu schneller Abgleich des Lenkzylinders mit damit verbundenen abrupten Lenkbewegungen der Arbeitsmaschine vermieden werden.

## Patentansprüche

1. Hydraulischer Lenkantrieb (1), mit einer als Lenkwinkelgeber ausgebildeten Positionsvorgabeeinrichtung (2), die mit einem als Lenkventil ausgebildeten Stellventil (3), in Verbindung steht, das in Abhängigkeit von der Betätigung der Positionsvorgabeeinrichtung (2) die Verbindung eines als Lenkzylinder ausgebildeten Stellzylinders (8), mit einer Druckmittelquelle (5) und einem Behälter (6) steuert, und einer Korrektureinrichtung (15), die in einem von der Geradeausfahrtstellung des Lenkantriebs gebildeten Referenzbereich eine Synchronisation zwischen der Stellung der Positionsvorgabeeinrichtung (2) und der Stellung des Stellzylinders (8) ermöglicht, **dadurch gekennzeichnet, dass** die Korrektureinrichtung eine Schieberventilfunktion (15), die den Referenzbereich des Stellzylinders (8) erfasst und bei nicht im Referenzbereich befindlichem Stellzylinder (8) einen Druckmittelausgleich am Stellzylinder (8) ermöglicht, und eine mit der Positionsvorgabeeinrichtung (2) in mechanischer Wirkverbindung stehende Schaltventilfunktion (16) aufweist, die eine den Druckmittelausgleich sperrende Sperrstellung und eine den Druckmittelausgleich ermöglichende Durchflussstellung aufweist, wobei die Schaltventilfunktion (16) bei in dem Referenzbereich befindlicher Positionsvorgabeeinrichtung (2) in die Durchflussstellung und bei nicht in dem Referenzbereich befindlicher Positionsvorgabeeinrichtung (2) in die Sperrstellung beaufschlagt ist.

2. Hydraulischer Antrieb nach Anspruch 1, **dadurch gekennzeichnet, dass** der Druckmittelausgleich durch eine von der Schieberventilfunktion (15) steuerbare Verbindung des Stellzylinders (8) mit dem Behälter (6) herstellbar ist, wobei die Schieberventilfunktion (15) bei nicht im Referenzbereich befindlichem Stellzylinder (8) eine Verbindung des Stellzylinders (8) mit dem Behälter (6) ermöglicht.

3. Hydraulischer Antrieb nach Anspruch 2, **dadurch gekennzeichnet, dass** die Schaltventilfunktion (16) in der von der Schieberventilfunktion (15) herstellbaren Verbindung des Stellzylinders (8) mit dem Behälter (6) angeordnet ist.

4. Hydraulischer Antrieb nach einem der Ansprüche 1 bis 3, **dadurch gekennzeichnet, dass** die Schieberventilfunktion (15) in dem Stellzylinder (8) integriert ist.

5. Hydraulischer Antrieb nach Anspruch 4, **dadurch gekennzeichnet, dass** die Schieberventilfunktion (15) einen im Referenzbereich am Stellzylinder (8) angeordneten Druckmittelanschluss (17) aufweist, der mit einer den Druckmittelausgleich ermöglichenden Druckmittelverbindung (18) in Verbindung steht, wobei der Druckmittelanschluss (17) von einem Kolben (10) des Stellzylinders (8) ansteuerbar ist.

6. Hydraulischer Antrieb nach Anspruch 5, **dadurch gekennzeichnet, dass** am Kolben (10) oder am Druckmittelanschluss (17) oder in der Druckmittelverbindung (18) eine Drosseleinrichtung (19) ausgebildet ist.

7. Hydraulischer Antrieb nach einem der Ansprüche 1 bis 6, **dadurch gekennzeichnet, dass** die Schaltventilfunktion (16) als ein mit der Positionsvorgabeeinrichtung (2) in mechanischer Wirkverbindung stehendes Schaltventil (20) ausgebildet ist.

8. Hydraulischer Antrieb nach Anspruch 7, **dadurch gekennzeichnet, dass** das Schaltventil (20) als Drehschieberventil ausgebildet ist.

9. Hydraulischer Antrieb nach Anspruch 8, **dadurch gekennzeichnet, dass** das Drehschieberventil mit einer Steuerkante (21) versehen ist, die bei in dem Referenzbereich befindlicher Positionsvorgabeeinrichtung (2) die von der Schieberventilfunktion (15) steuerbare Verbindung für den Druckmittelausgleich des Stellzylinders (8) öffnet.

10. Hydraulischer Antrieb nach einem der Ansprüche 1 bis 9, **dadurch gekennzeichnet, dass** das Schaltventil (20) am Stellventil (3) angeordnet ist.

11. Hydraulischer Antrieb nach einem der Ansprüche 1 bis 9, **dadurch gekennzeichnet, dass** das Schaltventil (20) in das Stellventil (3) integriert ist.

12. Hydraulischer Antrieb nach einem der Ansprüche 1 bis 11, **dadurch gekennzeichnet, dass** der Referenzbereich im Bereich der Neutralstellung des Stellzylinders (8) oder der Positionsvorgabeeinrichtung (2), insbesondere im Bereich der Geradeausfahrstellung des Lenkzylinders oder des Lenkwinkelgeber, ausgebildet ist.

13. Hydraulischer Antrieb nach einem der vorangegangenen Ansprüche, **gekennzeichnet durch** die Verwendung in einem Flurförderzeug, insbesondere einem Gabelstapler.

## Claims

1. Hydraulic steering drive (1), having a position input device (2), which is in the form of a steering angle transmitter and is connected to a control valve (3) in the form of a steering valve, which control valve (3), as a function of the actuation of the position input device (2), controls the connection of a control cylinder (8) in the form of a steering cylinder with a pressure medium source (5) and a reservoir (6), and having a correction device (15) which, in a reference region formed by the straight-on travel setting of the steering drive, permits synchronization between the setting of the position input device (2) and the setting of the control cylinder (8), **characterized in that** the correction device has a sliding valve function (15), which senses the reference region of the control cylinder (8) and, in the event of the control cylinder (8) not being located in the reference region, permits pressure medium compensation at the control cylinder (8), and a switching valve function (16), which is mechanically and operatively connected to the position input device (2) and has a blocking setting, which blocks pressure medium compensation, and a throughflow setting, which permits pressure medium compensation, the switching valve function (16) being caused to move into the throughflow setting when the position input device (2) is located in the reference region and being caused to move into the blocking setting when the position input device (2) is not located in the reference region.

2. Hydraulic drive according to Claim 1, **characterized in that** the pressure medium compensation can be produced by means of a connection between the control cylinder (8) and the reservoir (6), which connection can be controlled by the sliding valve function (15), the sliding valve function (15) permitting a connection between the control cylinder (8) and the reservoir (6) when the control cylinder (8) is not located in the reference region.

3. Hydraulic drive according to Claim 2, **characterized in that** the switching valve function (16) is arranged in the connection between the control cylinder (8) and the reservoir (6), which connection can be produced by the sliding valve function (15).

4. Hydraulic drive according to one of Claims 1 to 3, **characterized in that** the sliding valve function (15) is integrated in the control cylinder (8).

5. Hydraulic drive according to Claim 4, **characterized in that** the sliding valve function (15) has a pressure medium inlet (17), which is arranged in the reference region at the control cylinder (8) and is connected to a pressure medium connection (18) permitting pressure medium compensation, it being possible for the pressure medium inlet (17) to be driven by a piston (10) of the control cylinder (8).

6. Hydraulic drive according to Claim 5, **characterized in that** a throttle device (19) is formed at the piston (10) or at the pressure medium inlet (17) or in the pressure medium connection (18).

7. Hydraulic drive according to one of Claims 1 to 6, **characterized in that** the switching valve function (16) is in the form of a switching valve (20), which is mechanically and operatively connected to the position input device (2) .

8. Hydraulic drive according to Claim 7, **characterized in that** the switching valve (20) is in the form of a rotary slide valve.

9. Hydraulic drive according to Claim 8, **characterized in that** the rotary slide valve is provided with a control edge (21), which opens the connection for the pressure medium compensation of the control cylinder (8), which connection can be controlled by the sliding valve function (15), when the position input device (2) is located in the reference region.

10. Hydraulic drive according to one of Claims 1 to 9, **characterized in that** the switching valve (20) is arranged at the control valve (3).

11. Hydraulic drive according to one of Claims 1 to 9, **characterized in that** the switching valve (20) is integrated in the control valve (3).

12. Hydraulic drive according to one of Claims 1 to 11, **characterized in that** the reference region is formed in the region of the neutral setting of the control cylinder (8) or the position input device (2), in particular in the region of the straight-on travel setting of the steering cylinder or the steering angle transmitter.

13. Hydraulic drive according to one of the preceding claims, **characterized by** use in an industrial truck, in particular a fork-lift truck.

## Revendications

1. Dispositif d'actionnement directionnel hydraulique (1), pourvu d'un dispositif d'affectation de position (2) conformé en capteur d'angle de direction, qui est en liaison avec une soupape de réglage (3) conformée en soupape de direction, qui commande, en fonction de l'actionnement du dispositif d'affectation de position (2), la communication d'un cylindre de réglage (8) conformé en cylindre de direction avec une source de fluide hydraulique (5) et un récipient (6), et d'un dispositif de correction (15), qui permet, dans une zone de référence formée par la position de déploiement rectiligne du dispositif d'actionnement directionnel, une synchronisation entre la position du dispositif d'affectation de position (2) et la position du cylindre de réglage (8), **caractérisé en ce que** le dispositif de correction présente une fonction de soupape à tiroir (15), qui enregistre la zone de référence du cylindre de réglage (8) et permet, lorsque le cylindre de réglage (8) n'est pas situé dans la zone de référence, un équilibrage du fluide hydraulique dans le cylindre de réglage (8), et une fonction de soupape de commande (16) en coopération mécanique avec le dispositif d'affectation de position (2), ladite soupape présentant une position de blocage bloquant l'équilibrage du fluide hydraulique et une position d'écoulement permettant l'équilibrage du fluide hydraulique, la fonction de soupape de commande (16) étant appliquée en position d'écoulement lorsque le dispositif d'affectation de position (2) est situé dans la zone de référence et en position de blocage lorsque le dispositif d'affectation de position (2) n'est pas situé dans la zone de référence.

2. Dispositif d'actionnement hydraulique selon la revendication 1, **caractérisé en ce que** l'équilibrage du fluide hydraulique peut être établi par un raccordement du cylindre de réglage (8) avec le récipient (6), qui peut être commandé par la fonction de soupape à tiroir (15), la fonction de soupape à tiroir (15) permettant, lorsque le cylindre de réglage (8) n'est pas situé dans la zone de référence, un raccordement du cylindre de réglage (8) avec le récipient (6).

3. Dispositif d'actionnement hydraulique selon la revendication 2, **caractérisé en ce que** la fonction de soupape de commande (16) est aménagée dans le raccordement du cylindre de réglage (8) avec le récipient (6), qui peut être établi par la fonction de soupape à tiroir (15).

4. Dispositif d'actionnement hydraulique selon l'une quelconque des revendications 1 à 3, **caractérisé en ce que** la fonction de soupape à tiroir (15) est intégrée au cylindre de réglage (8).

5. Dispositif d'actionnement hydraulique selon la revendication 4, **caractérisé en ce que** la fonction de soupape à tiroir (15) présente un raccordement de fluide hydraulique (17) agencé dans la zone de référence sur le cylindre de réglage (8), ledit raccordement étant en liaison avec un raccordement de fluide hydraulique (18) permettant l'équilibrage du fluide hydraulique, le raccordement de fluide hydraulique (17) pouvant être commandé par un piston (10) du cylindre de réglage (8).

6. Dispositif d'actionnement hydraulique selon la revendication 5, **caractérisé en ce qu'**un dispositif d'étranglement (19) est formé sur le piston (10) ou sur le raccordement de fluide hydraulique (17) ou dans le raccordement de fluide hydraulique (18).

7. Dispositif d'actionnement hydraulique selon l'une quelconque des revendications 1 à 6, **caractérisé en ce que** la fonction de soupape de commande (16) se présente sous la forme d'une soupape de commande (20) en coopération mécanique avec le dispositif d'affectation de position (2).

8. Dispositif d'actionnement hydraulique selon la revendication 7, **caractérisé en ce que** la soupape de commande (20) se présente sous la forme d'une soupape à tiroir rotatif.

9. Dispositif d'actionnement hydraulique selon la revendication 8, **caractérisé en ce que** la soupape à tiroir rotatif est pourvue d'une arête de commande (21), qui ouvre, lorsque le dispositif d'affectation de position (2) se situe dans la zone de référence, le raccordement commandé par la fonction de soupape à tiroir (15) pour l'équilibrage du fluide hydraulique du cylindre de réglage (8).

10. Dispositif d'actionnement hydraulique selon l'une quelconque des revendications 1 à 9, **caractérisé en ce que** la soupape de commande (20) est agencée sur la soupape de réglage (3).

11. Dispositif d'actionnement hydraulique selon l'une quelconque des revendications 1 à 9, **caractérisé en ce que** la soupape de commande (20) est intégrée à la soupape de réglage (3).

12. Dispositif d'actionnement hydraulique selon l'une quelconque des revendications 1 à 11, **caractérisé en ce que** la zone de référence est formée dans la zone de la position neutre du cylindre de réglage (8) ou du dispositif d'affectation de position (2), en particulier dans la zone de la position de déploiement rectiligne du cylindre de direction ou du capteur d'angle de direction.

13. Dispositif d'actionnement hydraulique selon l'une quelconque des revendications précédentes, **caractérisé par** une utilisation dans un véhicule de manutention, en particulier un chariot élévateur à fourche.
